**Europäisches Patentamt**

**European Patent Office**

**Office européen des brevets**

(19)

(11) Veröffentlichungsnummer : **0 396 627 B1**

(12) **EUROPÄISCHE PATENTSCHRIFT**

(45) Veröffentlichungstag der Patentschrift :
**23.09.92 Patentblatt 92/39**

(51) Int. Cl.$^5$ : **F24D 3/00**

(21) Anmeldenummer : **89902942.5**

(22) Anmeldetag : **03.03.89**

(86) Internationale Anmeldenummer :
**PCT/EP89/00223**

(87) Internationale Veröffentlichungsnummer :
**WO 89/09368 05.10.89 Gazette 89/24**

(54) **ANORDNUNG ZUR ÜBERGABE VON FERNWÄRME AN EINE WASSERERWÄRMUNGSANLAGE.**

(30) Priorität : **24.03.88 DE 3809893**

(43) Veröffentlichungstag der Anmeldung :
**14.11.90 Patentblatt 90/46**

(45) Bekanntmachung des Hinweises auf die
Patenterteilung :
**23.09.92 Patentblatt 92/39**

(84) Benannte Vertragsstaaten :
**AT BE CH DE FR GB IT LI LU NL SE**

(56) Entgegenhaltungen :
**FR-A- 2 531 189**

(73) Patentinhaber : **STEAG Fernwärme GmbH**
**Bismarckstrasse 54**
**W-4300 Essen 1 (DE)**

(72) Erfinder : **BUSSKAMP, Walter**
**Georg-Vahrenhostweg 19**
**W-4290 Bocholt (DE)**
Erfinder : **LEHMANN, Heinrich**
**Schinkelstrasse 19**
**W-4630 Bochum (DE)**
Erfinder : **LENK, Arthur**
**Kleestrasse 21**
**W-4300 Essen 1 (DE)**
Erfinder : **LOCH, Franz-Josef**
**Julius-Leber-Strasse 47**
**W-4330 Mülheim/Ruhr (DE)**

EP 0 396 627 B1

Jouve, 18, rue Saint-Denis, 75001 PARIS

**Beschreibung**

Die Erfindung bezieht sich auf eine Anordnung zur Übergabe von Fernwärme an eine Wassererwärmungsanlage, mit einem Wärmetauschersystem zur Wärmeübertragung vom primärem Fernwärmemedium auf das sekundäre Medium, mit einer zur Wassererwärmungsanlage gehörigen Zirkulationsleitung, einer in die Wassererwärmungsanlage eingebundenen Umwälzpumpe, ferner mit wenigstens einem die Warmwasseraustrittstemperatur erfassenden Temperaturfühler und Absperrarmaturen für die Primär- und Sekundärkreisläufe.

Aus dem DE-GM 87 08 283 ist eine Fernwärme-Übergabevorrichtung in Form einer Kompaktstation bekannt, die in der Werkstatt oder beim Hersteller praktisch fertig vormontiert und dementsprechend kostensparend hergestellt und installiert werden kann. Die Warmwasserversorgung unter Verwendung von Fernwärme als primäres Wärmeträgermedium war bisher vor allem bei großen Anschlußleistungen, insbesondere bei der Warmwasserversorgung von Mehrfamilienhäusern, an eine aufwendige und dementsprechend kostspielige Technik gebunden. Nach DIN 4753 bzw. 4747 sind bei Wärmetauschern mit einer Leistung von mehr als 50 kW und/oder bei einem Wasserinhalt von mehr als l5 Litern kostspielige Sicherheitstemperaturbegrenzer vorgeschrieben, die bei geringeren Leistungen und Wasserinhalten entfallen können. Der Kostenanteil derartiger Sicherheitstemperaturbegrenzer an den Gesamtkosten einer leistungsstarken Wassererwärmungsanlage ist so erheblich, daß die Wettbewerbsfähigkeit einer leistungsstarken Übergabestation für den Warmwasserbereich eingeschränkt ist.

Aus der FR-A-2 53l l89 ist eine Wassererwärmungsanlage bekannt, deren Primärmedium auf einem kälteren Temperaturniveau gehalten wird, d.h. aus einer Geothermalquelle, Rekuperationswärme, Wärmepumpe o. dgl. abgeleitet wird. Als Übergabeanordnung dienen zwei Wärmetauscher, die primärseitig aus derselben Wärmequelle gespeist werden, denen jedoch sekundärseitig unterschiedliche Funktionen und Schaltungsanbindungen zugeordnet sind. Die Sekundäranordnung bedingt einen Warmwasser-Speicher, der als Puffer wirkt und eine gleichmäßige und niedrige Energieentnahme über die beiden Wärmetauscher gewährleisten soll.

Demgegenüber liegt der Erfindung die Aufgabe zugrunde, die Installationskosten von leistungsstarken Übergabeanordnungen der eingangs genannten Gattung unter Einhaltung der strikten Sicherheitsanforderungen nach der DIN Norm deutlich herabzusetzen.

Diese Aufgabe wird erfindungsgemäß dadurch gelöst, daß das Wärmetauschersystem aus wenigstens zwei Wärmetauschern von im wesentlichen übereinstimmender Größe und Leistung besteht und daß die Wärmetauscher sowohl primärseitig als auch sekundärseitig zueinander parallel geschaltet und ständig parallel nur an einen gemeinsamen Kaltwasserzulauf sowie einen gemeinsamen Warmwasservorlauf angebunden sind, wobei in jedem der zulaufzweige von dem Kaltwasserzulauf zu den parallel angebundenen Wärmetauschern eine Regulierarmatur zum Strömungsabgleich angeordnet ist, jeder der Wärmetauscher des Wärmetauschersystems für eine Leistung ≤ 50 kW und einen Wasserinhalt von maximal l5 l ausgelegt ist und in dem Kaltwasserzulauf vor den Zulaufzweigen ein kombiniertes Freifluß-Rückschlagventil angeordnet ist.

Mit der Erfindung wird einfach die gewünschte Wassererwärmungsleistung auf eine entsprechende Anzahl von parallel geschalteten Wärmetauschereinheiten aufgeteilt, wodurch auf jeden Durchlaufwärmetauscher nicht mehr als die nach DIN Norm festgelegten Höchstwerte entfallen. Diese Maßnahme hat außerdem den Vorteil, daß die für verschiedene Wassererwärmungsanlagen benötigten stark unterschiedlichen Leistungen mit einer einzigen Wärmetauschergröße beherrschbar sind. Die gleichmäßige Beaufschlagung der Wärmetauscher ist durch die Regulierarmaturen in jedem der Zulaufzweige zu den parallel angebundenen Wärmetauschern gewährleistet. Mehrere Wärmetauscher können in Nebeneinanderanordnung zu einer Batterie zusammengeschaltet und, wie aus dem DE-GM 87 08 283 bekannt, mechanisch an einem flachen Trägerrahmen als eine Baueinheit gehaltert werden. Die Erfindung führt daher nicht nur zu einer beträchtlichen Reduktion der Installationskosten durch den Fortfall von Sicherheitstemperaturbegrenzern bei leistungsstarken Anlagen, sondern auch zu der Möglichkeit einer Vereinheitlichung der Anlagenkomponenten, insbesondere der Wärmetauscher. Die geltenden DIN Vorschriften werden auch ohne Sicherheitstemperaturbegrenzer strikt eingehalten, da jeder der parallel geschalteten Wärmetauscher für eine Leistung ≤ 50 kW und einen Wasserinhalt von maximal l5 l ausgelegt ist.

Die Zirkulationsleitung, die unmittelbar vor der letzten Zapfstelle des Warmwasservorlaufs abzweigt, ist in Weiterbildung der Erfindung an den Einlaß nur eines der ständig parallel geschalteten Wärmetauscher angebunden. Weitere vorteilhafte Ausgestaltungen der Erfindung sind in weiteren Unteransprüchen gekennzeichnet.

Die Erfindung wird in der nachfolgenden Beschreibung und Zeichnung anhand eines Ausführungsbeispiels näher erläutert. In der Zeichnung zeigen:

Fig. l ein schematisches Schaltbild einer Fernwärme-Hausstation, die mit einer Wassererwärmungsanlage nach der Erfindung ausgestattet ist;

2

Fig. 2 eine Frontansicht auf die wesentlichen Komponenten der Wassererwärmungsanlage gemäß Figur I in der Installationslage an einem Trägerrahmen; und

Fig. 3 eine Seitenansicht der Anordnung gemäß Figur 2.

Wie Figur I zeigt, sind die der Warmwasserbereitung dienende Übergabeanordnung I und die der Heizwassererwärmung dienende Übergabeanordnung 2 parallel zueinander an die Fernwärme-Vor- und Rückläufe 3 und 4 angebunden. Die Anlage zur Heizwasserübergabe 2 ist als strichpunktierter Block dargestellt. In herkömmlicher Ausführung sind die in den Fernwärme-Vor- und Rückläufen 3 und 4 installierten Armaturen und Meßgeräte ausgebildet.

Die der Warmwasserbereitung dienende Übergabeanordnung I hat bei dem in Figur I dargestellten Ausführungsbeispiel zwei Wärmetauscher I0 und II, deren Primärseiten I2 und I3 und deren von Warmwasser durchströmten Sekundärseiten I4 und I5 paarweise parallel geschaltet sind. Die primärseitigen Einlässe I6 und I7 der beiden Wärmetauscher sind über eine übliche Absperrarmatur an die Fernwärme-Vorlaufleitung 3 und die primärseitigen Auslässe I8 und I9 jeweils über eine Regelarmatur 20 und 2I sowie über eine gemeinsame Absperrarmatur an die Fernwärme-Rücklaufleitung 4 angebunden.

Die Wassererwärmungsanlage hat einen Kaltwasserzulauf KW mit einem kombinierten Freifluß-Rückschlagventil 23. Hinter dem Ventil 23 verzweigt sich die Kaltwasserleitung KW in zwei Äste 24 und 25, die an die beiden Einlässe der Sekundärseiten I4 bzw. I5 der beiden parallelen Wärmetauscher I0 und II angebunden sind. In den beiden Kaltwasserästen 24 und 25 sind geeignete Regulierarmaturen 26, 27 zum anfänglichen Abgleich der relativen Durchflußmengen angeordnet.

Die Auslässe 28 und 29 der Sekundärseiten I4 und I5 der beiden parallel geschalteten Wärmetauscher münden in den gemeinsamen Warmwasservorlauf 30. Über den Warmwasservorlauf werden die angebundenen Warmwasserzapfstellen 3Ia, 3Ib … 3In mit Warmwasser versorgt. Vor der in der Warmwasserleitung letzten Zapfstelle 3In ist von dem Warmwasservorlauf 30 eine Zirkulationsleitung 32 abgezweigt, die zum Einlaß 33 der Sekundärseite I4 des einen Wärmetauschers I0 zurückgeführt ist. Das Warmwasser wird mit Hilfe der Umwälzpumpe 34 durch die Leitung 32, die Sekundärseite I4 und die Warmwasservorlaufleitung 30 zirkuliert, damit Warmwasser an jeder Zapfstelle 3Ia … 3In praktisch verzögerungsfrei zur Verfügung steht.

Ein am Auslaß 28 bzw. 29 der Sekundärseite jedes Wärmetauschers I0 bzw. II angeordneter Temperaturfühler 36 bzw. 37 wirkt bei dem dargestellten Ausführungsbeispiel mit der zugehörigen Regelarmatur 20 bzw. 2I derart zusammen, daß durch geeignete Durchflußregelung des Fernheizmediums die Solltemperatur am jeweiligen Auslaß 28 bzw. 29 eingestellt wird.

Eine anfängliche Einstellung der Regulierarmaturen 26 bzw. 27 bei der Betriebsaufnahme der Anlage I reicht zur Aufteilung der Leistungsanteile der in der Gesamtanlage parallel geschalteten Wärmetauscher I0 und II aus. Überraschenderweise läuft die Anlage I mit den Wärmetauschern I0 und II im Parallelbetrieb völlig abgeglichen über den ganzen Leistungsbereich, ohne daß es besonderer Druckausgleichsmaßnahmen an den Ausgängen 28 bzw. 29 der Sekundärseiten der Wärmetauscher I0 und II bedarf.

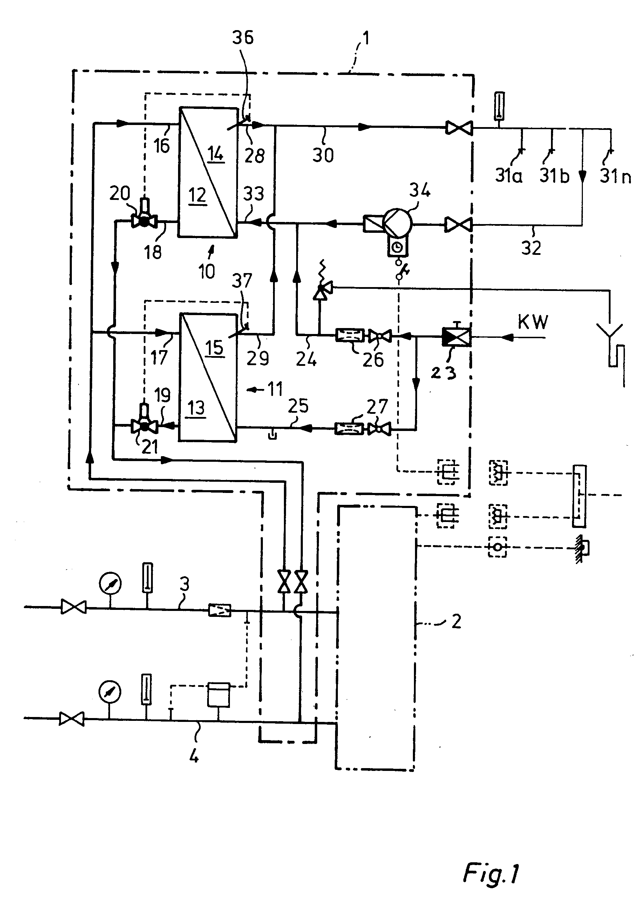

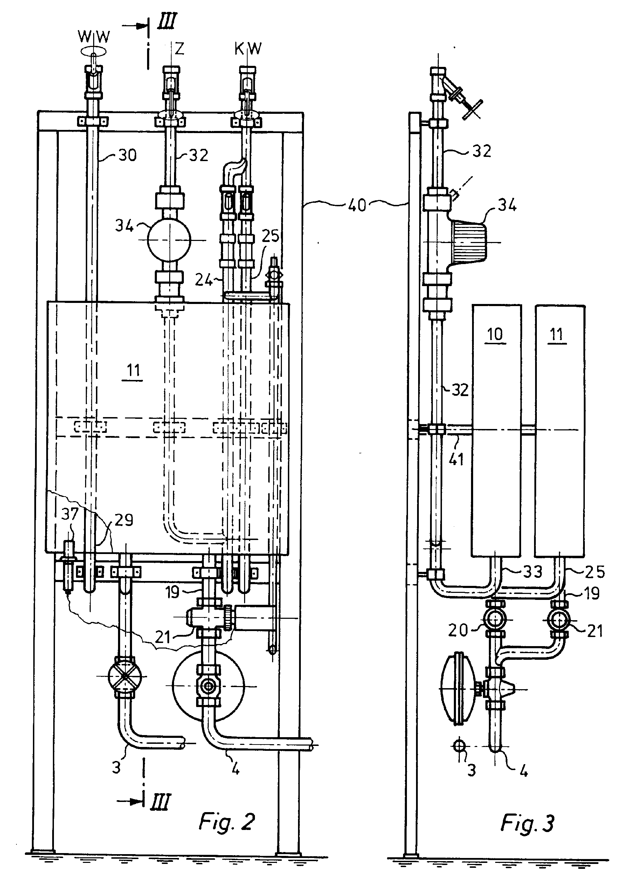

Die Figuren 2 und 3 veranschaulichen schematisch die Installation der an der Wärmeübergabe beteiligten Komponenten der Übergabeanordnung I an einem flachen Trägerrahmen einer Fernwärme-Hausstation. Es ist klar, daß die Heizwassererwärmungsanlage 2 entweder an einem zusätzlichen, benachbarten Installationsrahmen oder an dem gleichen Rahmen 40 angeordnet werden kann, wie dies in dem obengenannten Gebrauchsmuster beschrieben ist.

Bei dem Installationsbeispiel nach den Figuren 2 und 3 sind die beiden Wärmetauscher I0 und II einseitig vor dem Trägerrahmen 40 nebeneinander angeordnet und durch geeignete Anker 4I gehaltert. Sie finden zusammen mit den übrigen Funktionskomponenten der Hausstation unter einer relativ kompakten, in der Zeichnung nicht dargestellten Abdeckhaube gemeinsam Platz. In ähnlicher Weise kann auch eine beliebige größere Anzahl von Wärmetauschern nach Art einer Batterie neben- bzw. hintereinander installiert werden. Die an die parallelen Ein-und Auslässe der Wärmetauscher I0 und II angebundenen Leitungsäste sind in den Figuren 2 und 3 nur unvollständig gezeigt. Bezüglich ihrer baulichen Integration in die Gesamtanordnung und ihrer Ausbildung gibt es, wie für den Fachmann verständlich ist, keine besonderen Beschränkungen; sie können nach den jeweiligen örtlichen Bedingungen ausgewählt werden.

Die Einzelkomponenten sind herkömmlicher Ausführung und können aufgrund der Standardisierung der parallel geschalteten Wärmetauscher I0 und II ohne Probleme vereinheitlicht werden. Auf diese Weise läßt sich die Lagerhaltung vereinfachen und verbilligen, und es können auch Fernwärme-Übergabestationen von in weiten Grenzen unterschiedlichen Leistungen in Modulbauweise realisiert werden. Als Wärmetauscher I0 bzw. II haben sich sogenannte Rohr-in-Rohr- wärmetauscher bewährt, die als solche im Handel erhältlich sind.

**Patentansprüche**

I. Anordnung zur Übergabe von Fernwärme an eine Wassererwärmungsanlage, mit einem Wärmetauschersystem zur Wärmeübertragung vom primärem Fernwärmemedium auf das sekundäre Medium, einer zur Wassererwärmungsanlage gehörigen Zirkulationsleitung (32), einer in die Wassererwärmungsanlage eingebundenen Umwälzpumpe (34), ferner mit wenigstens einem die Warmwasseraustrittstemperatur erfassenden Temperaturfühler (36, 37) und Absperrarmaturen für die Primär- und Sekundärkreisläufe,
dadurch gekennzeichnet,
daß das Wärmetauschersystem aus wenigstens zwei Wärmetauschern (I0, II) von im wesentlichen übereinstimmender Größe und Leistung besteht und daß die Wärmetauscher sowohl primärseitig (I2, I3) als auch sekundärseitig (I4, I5) zueinander parallel geschaltet und ständig parallel nur an einen gemeinsamen Kaltwasserzulauf (KW) sowie einen gemeinsamen Warmwasservorlauf (30) angebunden sind, wobei in jedem der Zulaufzweige (24, 25) von dem Kaltwasserzulauf (KW) zu den parallel angebundenen Wärmetauschern (I0, II) eine Regulierarmatur (26, 27) zum Strömungsabgleich angeordnet ist, jeder der Wärmetauscher (I0, II) des Wärmetauschersystems für eine Leistung ≤ 50 kW und einen Wasserinhalt von maximal I5 l ausgelegt ist und in dem Kaltwasserzulauf (KW) vor den Zulaufzweigen (24, 25) ein kombiniertes Freifluß-Rückschlagventil (23) angeordnet ist.

2. Anordnung nach Anspruch I
dadurch gekennzeichnet,
daß jedem Wärmetauscher (I0, II) sekundärseitig ein die Warmwasser-Austrittstemperatur erfassender Temperaturfühler (36, 37) zugeordnet ist, der mit einer in der primärseitigen Austrittsleitung (I8, I9) des zugehörigen Wärmetauschers angeordneten Regletarmatur (20, 2I) verbunden ist.

3. Anordnung nach einem der Ansprüche I oder 2,
dadurch gekennzeichnet,
daß die Zirkulationsleitung (32) an den Einlaß (33) nur eines (I0) der ständig parallel geschalteten Wärmetauscher (I0, II) angebunden ist.

4. Anordnung nach einem der Ansprüche I bis 3
dadurch gekennzeichnet,
daß alle Wärmetauscher (I0, II) als Batterie räumlich nebeneinander installiert, zu einer mechanisch stabilen Einheit zusammengeschlossen und durch eine Haube gemeinsam abgedeckt sind.

**Claims**

1.  Arrangement for the delivery of district heat to a water heating plant, with a heat exchanger system for the heat transmission from a primary district heat medium to the secondary medium, a circulation duct (32) belonging to the water heating plant, a circulation pump (34) incorporated in the water heating plant, and further with at least one temperature sensor (36, 37) detecting the hot water exit temperature and blocking valves for the primary and secondary circuits, characterised thereby that the heat exchanger system consists of at least two heat exchangers (10, 11) of substantially corresponding size and output and that the heat exchangers of both the primary side (12, 13) and the secondary side (14, 15) are connected in parallel with one another and coupled permanently in parallel only to a common cold water feed (KW) as well as a common hot water lead (30), wherein a regulating valve (26, 27) for the flow equalisation is arranged in each of the feed branches (24, 25) of the cold water feed (KW) to the heat exchangers (10, 11) coupled in parallel, each of the heat exchangers (10, 11) of the heat exchanger system is designed for an output equal to or less than 50 kilowatts and a maximum water capacity of 15 litres, and a combined free-flow and non-return valve (23) is arranged in the cold water feed (KW) in front of the feed branches (24, 25).

2.  Arrangement according to claim 1, characterised thereby that associated with each heat exchanger (10, 11) at the secondar side is a temperature sensor (36, 37) which detects the hot water exit temperature and which is connected with a regulating valve (20, 21) arranged in the primary side outlet duct (18, 19) of the respective heat exchanger.

3.  Arrangement according to one of claims 1 or 2, characterised thereby that the circulation duct (32) is coupled at the inlet (33) only to one (10) of the heat exchangers (10, 11) permanently connected in parallel.

4.  Arrangement according to one of claims 1 to 3, characterised thereby that all heat exchangers (10, 11) are installed as a battery spatially adjacent to one another, are combined into a mechanically stable unit and are covered in common by a hood.

## Revendications

1. Dispositif destiné au transfert de chaleur produite à distance à une installation d'échauffement d'eau, comprenant un système d'échangeurs de chaleur pour le transfert de chaleur du milieu primaire de chaleur produite à distance au milieu secondaire, une canalisation de circulation (32) faisant partie de l'installation d'échauffement d'eau, une pompe de circulation (34) intégrée dans l'installation d'échauffement d'eau, en outre au moins un capteur de température (36, 37) captant la température de l'eau chaude sortante et une robinetterie d'arrêt pour les circuits primaire et secondaire,

   caractérisé en ce que le système d'échangeurs de chaleur comprend au moins deux échangeurs de chaleur (10, 11) de grandeur et rendement substantiellement correspondants, et en ce que les échangeurs de chaleur, aussi bien côté primaire (12, 13) que côté secondaire (14, 15) sont commutés parallèlement l'un à l'autre et sont raccordés, en permanence, parallèlement à une seule arrivée d'eau froide commune (KW) ainsi qu'à une entrée d'eau chaude (30) commune, dans chaque conduit d'embranchement (24, 25) de l'arrivée d'eau froide (KW) aux échangeurs de chaleur (10, 11) intégrés de façon parallèle étant prévu une robinetterie de régulation (26, 27) pour l'équilibrage de l'écoulement, chacun des échangeurs de chaleur (10, 11) du système d'échangeurs de chaleur étant conçu pour un rendement $\leq 50$ kW et un contenu d'eau de 15 l maximum, et en ce qu'un clapet de retenue-d'écoulement libre (23) combiné est disposé dans l'arrivée d'eau froide (KW) devant les conduits d'embranchement (24, 25).

2. Dispositif selon la revendication 1, caractérisé en ce qu'à chaque échangeur de chaleur (10, 11) est associé, côté secondaire, un capteur de température (36, 37) captant la température de sortie de l'eau chaude et qui est relié à une robinetterie de réglage (20, 21) disposée dans la conduite de sortie (18, 19) côté primaire de l'échangeur de chaleur associé.

3. Dispositif selon l'une des revendications 1 ou 2, caractérisé en ce que la canalisation de circulation (32) est reliée à l'entrée (33) seulement d'un (10) des échangeurs de chaleur (10, 11) commutés en permanence parallèlement.

4. Dispositif selon l'une des revendications 1 à 3, caractérisé en ce que tous les échangeurs de chaleur (10, 11) sont installés dans l'espace les uns à côté des autres pour former une batterie, sont réunis pour former une unité mécanique stable et sont recouverts en commun par un capot.

*Fig.1*

Fig. 2

Fig. 3